# EUROPEAN PATENT SPECIFICATION

(11) **EP 3 106 626 B1**
(45) Date of publication and mention of the grant of the patent: **03.01.2018**
(21) Application number: 16168763.7
(22) Date of filing: 09.05.2016
(51) Int. Cl.: F01D 21/04

(54) **SYSTEM FOR DETECTING ABNORMAL MOVEMENT OF A SHAFT IN A GAS TURBINE ENGINE**
SYSTEM ZUR DETEKTION VON ANORMALER BEWEGUNG EINER WELLE IN EINEM GASTURBINENMOTOR
SYSTÈME DE DÉTECTION DE MOUVEMENT ANORMAL D'UN ARBRE DANS UN MOTEUR À TURBINE À GAZ

(30) Priority: 15.06.2015 GB 201510426
(43) Date of publication of application: 21.12.2016
(73) Proprietor: WESTON AEROSPACE LIMITED, Farnborough Hampshire GU14 7PW (GB)
(72) Inventor: OATES, Ray, Farnborough, Hampshire GU14 7PW (GB)
(74) Representative: Vleck, Jan Montagu

(56) References cited:
- US-B2- 6 607 349

## Description

The present invention is concerned with a system for detecting a broken shaft in a gas turbine engine and a method for making a detector element for use in such a system. A broken shaft in a gas turbine engine results in the risk of so-called "turbine over-speed". When the shaft of, for example, a jet engine breaks, the compressor mass is lost to the rotating system so the shaft and turbine then rotates significantly more quickly. The movement of the turbine can be sufficiently fast to cause the turbine to fly apart and break.

Gas turbine engines (e.g. jet engines) include a rotating shaft having compressor and/or turbine blades mounted thereon and rotating therewith. Axial movement of the shaft relative to the remainder of the engine is considered to be an abnormal movement and indicative of engine failure (e.g. shaft breakage). Detection of axial movement of the shaft relative to the remainder of the engine can therefore be used to detect engine failure and used to prevent further damage to the engine by activating a shut off of the engine. A shaft links the turbine and compressor. If the shaft is broken, the turbine portion moves backwards because of the effect of combustion gases. The compressor elements would lose power and stop rotating.

It is known to detect abnormal movement of a gas turbine shaft relative to the engine casing by providing a circuit breaking element which is fixed to the shaft and moves therewith if and when the shaft moves in an axial direction to break a circuit and thereby produce a signal.

US 6,607,349 discloses a broken shaft detection system and a method which uses a detector assembly mounted downstream of a power turbine wheel of a gas turbine engine to detect rearward axial motion of the wheel and thereby a broken shaft event. The detector assembly has a plunger positioned to be axially displaced against a link connected in an electrical circuit. The link may be broken when the plunger is displaced thereby creating an open circuit that may be detected by a detection and test element. The breaking may be communicated to an over-speed circuit that controls a shut off switch that interrupts fuel flow to the engine. The link may be connected to the detection and test element by two pairs of parallel wires to facilitate monitoring of circuit function and to detect failures that are not broken shaft event failures. US 2003/0091430, GB 2,468,686 and WO 99/00585 disclose similar arrangements.

The system of US 6,607,349 has been used successfully in commercial engines. But it would be desirable to produce a system that improves on the system of US 6,607,349, in particular by reducing the variability in the force and distance of movement of the shaft required to detect a broken shaft.
The present invention provides a system according to claim 1 and a detector element according to claim 11. Preferred features are defined in dependent claims 2 to 9 and 11-14. Exemplary embodiments provide a system for detecting abnormal axial movement of a shaft in a gas turbine engine, the system comprising a detection circuit including:
i) a detector element including a frangible link portion forming part of an electrical detection circuit and a plunger integral with the frangible link portion, wherein the plunger is arranged such that it is displaced by abnormal axial movement of the gas turbine shaft to break the frangible link portion from the remainder of the detection circuit and thereby break the electrical detection circuit; and
ii) two connection blocks each having a connection at a respective first portion for electrical connection to a signal sensing unit, and being connected at respective second portions to opposite ends of the frangible link portion such that the electrical circuit running through the detector element and a signal sensing unit is modified when the frangible link portion is broken by movement of the plunger.
Further exemplary embodiments also provide a detector element for detecting abnormal axial movement of a shaft in a gas turbine engine, the detector element comprising:
i) two separated conductive connection blocks having a space between them and with respective first portions connected by a conductive frangible link portion spanning the space between the first portions of the connection blocks;
ii) a plunger integral with the frangible link portion; and
iii) the walls of the connection blocks facing the space between the two separated connection blocks having an insulating outer layer;
wherein, in use, the plunger may be arranged so that it is displaced as a result of abnormal movement of a gas turbine shaft to break the frangible link portion from the two separated conductive connection blocks and displace the frangible link portion into the space between the insulating layers on the walls of the connection blocks.

The system and detector of the present invention solves a number of related problems with the system of US 6,607,349, which uses a plunger adjacent to a frangible link. In the system of US 6,607,349 the plunger has to be retained in the detector unit so that it does not contact the frangible link during normal operation. This is to prevent wear of the link, which could result in false activation under operational vibration conditions and manoeuver loads that result from acceleration and changes in attitude of the gas turbine engine. The manner in which the plunger is retained in the detector unit can introduce variability of the activation force required to move the plunger and may constrain its movement within the detector unit.

Keeping the plunger out of contact with the frangible link during normal operation also requires an additional clearance to be provided between it and the frangible link to allow for tolerance variations between the parts through the critical stack. These additional clearances increase the distance that the plunger has to travel to activate the detector.

The clearance between the independent plunger and frangible link can be affected by the different thermal expansion rate of the separate parts of the system, which leads to variability in the distance of travel required to activate the detector. This reduces the reliability of the detector.

Integrating the plunger and the frangible link removes the need to control the gap between the plunger and the frangible link and the need to otherwise retain the plunger during normal operation. It also reduces variability in the activation force required to displace the plunger and the distance of travel required of the plunger and therefore improves accuracy and reliability.

Preferred embodiments of the present invention will now be described, by way of example only, with reference to the attached figures. The figures and following description are intended to exemplify the invention and it will be readily appreciated that alternative embodiments of the invention are envisaged and are covered by the scope of the claims.
Figure 1a is a schematic illustration of a system for detecting abnormal movement of a shaft in a gas turbine engine using a frangible link;
Figure 1b is a schematic illustration of the system of Figure 1a with the frangible link broken;
Figure 2 is a schematic illustration of a system in accordance with the invention, with an integral frangible link and plunger;
Figure 3a is a schematic illustration of the construction of a detector comprising an integral frangible link, plunger and connector blocks;
Figure 3b shows the detector of Figure 3a with the frangible link broken;
Figure 4 illustrates the mounting of the detector of Figure 3a in a gas turbine engine;
Figure 5 illustrates of the component parts of a detector of the type shown in Figure 3a; and
Figure 6 illustrates a method of construction of the detector of Figure 5.

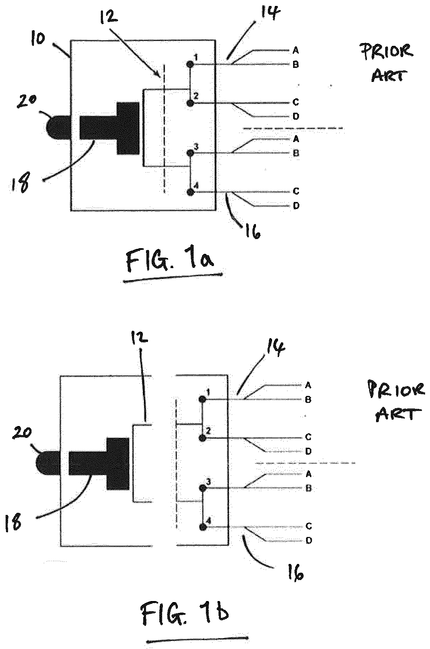

Figures 1 a and 1b are schematic illustrations of a system for detecting abnormal movement of a shaft in a gas turbine engine using a frangible link, as described in US 6,607,349.

The system comprises a detector assembly 10 to which forms part of a detection circuit or circuits. The detector assembly comprises an electrically conductive link 12 that connects two parallel sets of wires 14, 16. The parallel set of wires connect to a controller (not shown). The controller is able to determine if the electrically conductive link is intact, as shown in Figure 1a, or if the electrically conductive link is broken, as shown in Figure 1b, by monitoring the voltages or currents on the parallel wires. As shown in Figures 1a and 1b, the pairs of parallel wires may be split to connect to a second controller (not shown) to provide redundancy.

In the prior system, as shown in Figures 1a and 1b (and described in US 6,607,349), the electrically conductive link 12 is mounted in the gas turbine engine proximate to a plunger 18. The plunger 18 is mounted adjacent to a shaft disc 20 so that, if the shaft breaks and moves rearward in the engine the shaft disc 20 pushes the plunger 18 against the link 12 thereby breaking the link.

When the controller detects that the link is broken, it can communicate with an engine shut down circuit to ensure that the fuel supply to the engine is shut off and catastrophic engine over speed is prevented.

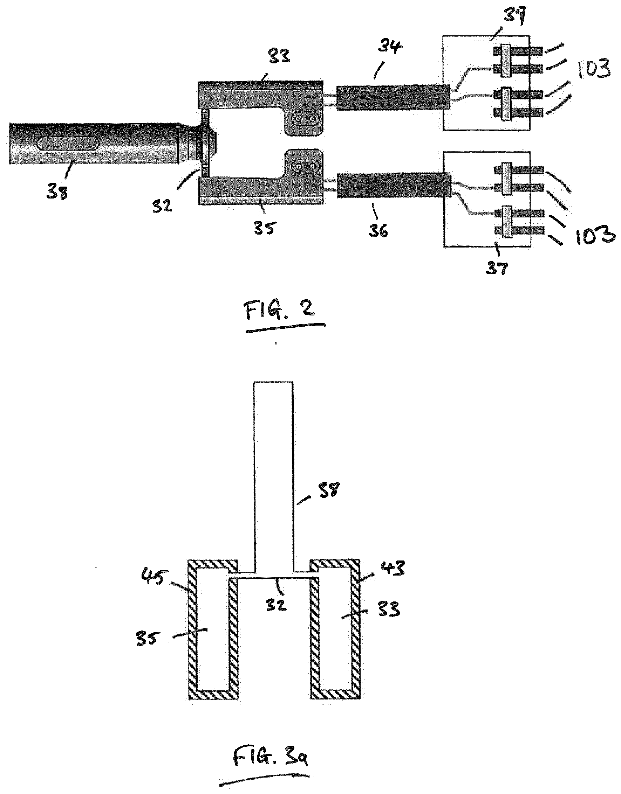

Figure 2 is a schematic illustration of a detector and system in accordance with an embodiment of the invention. The system again comprises a plunger 38 and a frangible conductive link 32 connecting two pairs of conductive wires 34, 36. However, in this embodiment, the plunger is formed integrally with the frangible, electrically conductive link 32 and a pair of connection blocks 33, 35. The frangible link 32 connects the first connection block 35 to the second connection block 33. The first pair of wires 34 is connected to the first connection block 33 and the second pair of wires 36 is connected to the second connection block 35. The two pairs of wires 34, 36 are shown encased in respective sleeves 31. The first pair of wires 34 is in turn connected to a first connector 39 unit and the second pair of wires 36 is connected to a second connector 37 unit. The first and second connector units each include four pins 4 arranged in pairs. Each of the wires forming part of the pairs of wires 34, 36 is connected to one if the pins of each pair of pins. The connector pins 103 from the first and second output connector units 37, 39 are connected to first and second controller channels as described with reference to Figures 1 a and 1b. The controller channels are connected to an electronic control unit (ECU) of the type described in US 6,607,349. The ECU controller can determine which of the various current pathways might be broken and thereby determine when the frangible link 32 and/or one or more of the wires 34, 36 are broken.

In operation, if the shaft in the gas turbine engine breaks, the shaft drives the plunger 38 towards the connection blocks 33, 35 and so breaks the frangible link. The plunger is guided by the connection blocks. The breaking of the frangible link 32 can be detected in the same way as described in US 6,607,349, with the parallel wires and parallel controllers providing redundancy and allowing a determination to made of whether the link 32 is broken or if there is a fault elsewhere in the circuitry (for example if one of the wires of the pairs of wires 34, 36 is broken).

In this example, the frangible link, a plunger core and the connection blocks are metal injection moulded in one detector piece. Any suitable sintered material may be used. In this example the plunger core, frangible link and connection blocks are formed from Kovar alloy ASTM F-15.

It is possible to form the detector piece using techniques other that metal injection moulding. For example, the detector piece could be formed using pressed powder sintering, casting, or machining. Alternatively, the detector piece may be formed from two or more parts that are subsequently fixed to each other, for example by welding or using an electrically conductive adhesive. However, using multiple parts that are subsequently fixed to each other tends to result in greater dimensional variation in the finished detector piece.

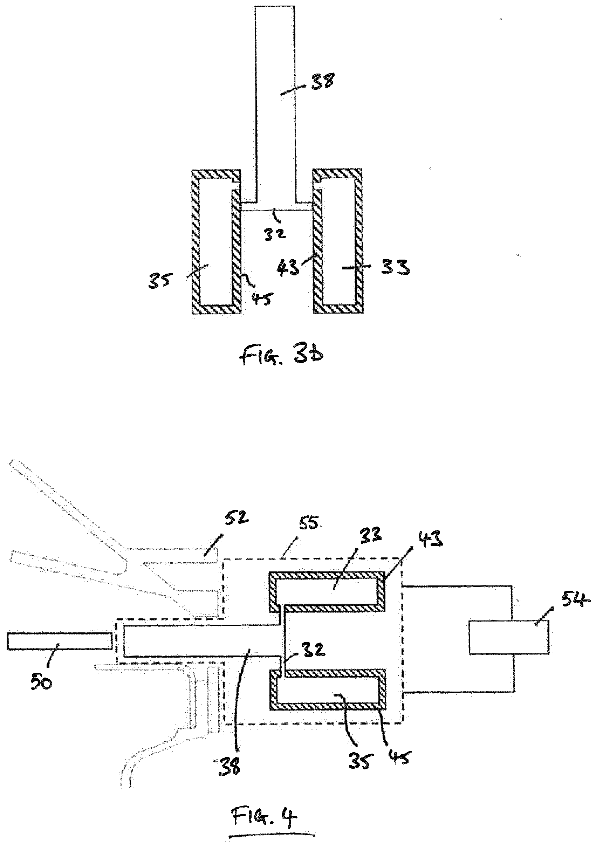

The connection blocks are also provided with a ceramic coating, as illustrated in Figures 3a and 3b. The ceramic coating prevents reconnection of the connection blocks by the frangible link after the link has been broken. Figure 3a illustrates the detector piece before the frangible link is broken. The first connection block 33 is coated with ceramic layer 43 and the second connection block 35 is coated with ceramic layer 45. Figure 3b illustrates the detector after the link has been broken, with the plunger guided between the connection blocks. It can be seen that the link 32 cannot form an electrical connection between the connection blocks because of the electrically insulating barrier provided by the ceramic coating 43, 45. In this example the ceramic coatings are injection moulded onto the detector piece and are formed from glass bonded mica ceramic. Kovar alloy ASTM F-15 and glass bonded mica ceramic have similar coefficients of thermal expansion, ensuring that the detector is not damaged by the large changes of temperature it must experience inside a gas turbine engine.

Figure 4 illustrates the mounting of the detector of Figure 3a in a gas turbine engine. The detector is fixed to the engine casing 52. The detector may be protected from the harsh environment of the interior of the gas turbine engine by a collapsible cap 55 over the plunger. A shaft disc 50 is illustrated adjacent the plunger 38, with the cover interposed between them. When the shaft disc moves as a result of a shaft breakage, is drives the plunger between the connection blocks 33, 35 and thereby breaks the frangible link. Also shown schematically in Figure 4 is a controller 54, that is connected to the detector and can determine when the frangible link has been broken. The controller can then send a signal to an engine shut down circuit as previously described.

As can be seen from Figure 4, with the plunger 38 fixed to the frangible link 32 the only clearance in the system is between the plunger 38 and the shaft disc 50. The absence of a clearance between the plunger and the frangible link significantly reduces variations in the distance the plunger has to travel to break the link as a result of tolerances within the critical component stack. Fixing the plunger to the frangible link also reduces variability in the force required to move the plunger to break the link. By reducing variability from one system to the next, the system can be made more reliable.

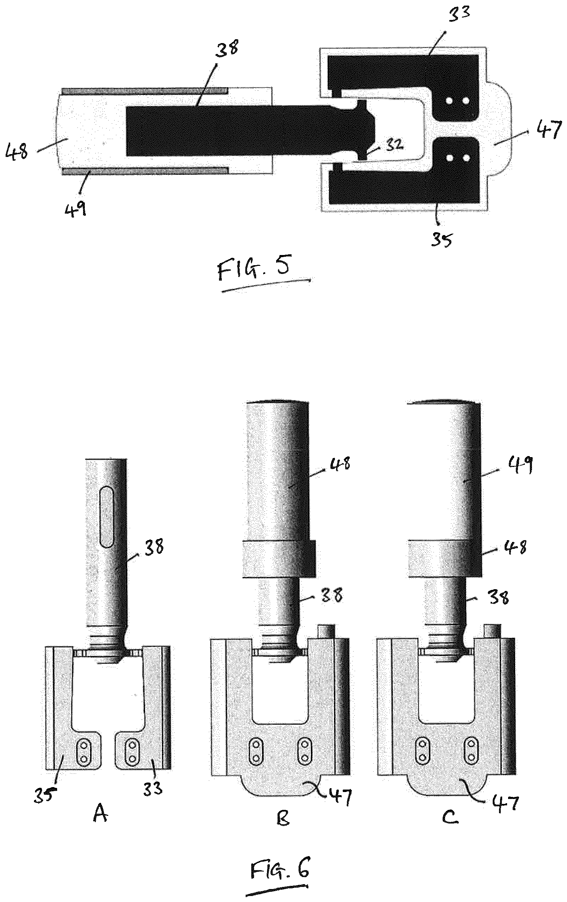

Figure 5 is a cross section of one example of a detector of the type shown in Figure 3a and Figure 3b. Figure 5 shows the detector after the frangible link has been broken. In the example of figure 5 it can be seen that ceramic coating on the first and second connection blocks is formed in one piece 47 to join the connector blocks 33, 35 and provide greater mechanical strength. The plunger 38 also has a ceramic coating 48, made from the same material as the coating 47, to provide some protection against the elevated temperatures of the gas turbine engine. Coatings 47 and 48 electrically isolate the plunger 38, link 32 and connection blocks 33 and 35 from the cap 55 to stop any possibility of the cap providing a conductive link between the connection blocks. A steel sleeve 49 is provided over the ceramic coating 48 to retain the ceramic under the impact of the shaft disc 50. It is advantageous that the frangible link is not coated with ceramic in order to ensure that the break or breaks occur outside of the ceramic. If a break were to occur through the ceramic layer, fractures in the ceramic might result in pieces of ceramic falling off, increasing the risk of the broken link contacting and reconnecting the connection blocks.
An assembly as shown in Figure 5 may be made using the process shown in Figure 6. Figure 6 illustrates the stages in a manufacture of the detector. In a first stage A, connection blocks 33, 35, frangible link 32 and plunger core 38 are metal injection moulded in a single piece, from Kovar alloy. In a second stage B, glass bonded mica ceramic is injection moulded around the plunger core and around the connection blocks 33, 35, to join the connection blocks together. In a final stage C, the steel cap 49 is placed over the ceramic coating 48 on the plunger 38.
It can be seen that a system and detector as described can be made in a simple and inexpensive manner and can provide significant reliability improvements over existing systems for detecting a broken shaft in a gas turbine engine.

## Claims

1. A system for detecting abnormal movement of a shaft in a gas turbine engine comprising a detection circuit, the detection circuit comprising a frangible link portion (32) and a plunger (38), **characterised in that** the plunger is fixed to the frangible link portion (32), wherein the plunger may be displaced as a result of abnormal movement of the gas turbine shaft to break the frangible link portion from the detection circuit.

2. A system according to claim 1 wherein breaking the frangible link portion (32) from the detection circuit may thereby modify the detection circuit and generate a signal when the link portion is broken from the detection circuit.

3. A system according to any preceding claim, wherein at least a portion of the plunger (38) is integrally formed with the frangible link portion (32).

4. A system according to any preceding claim, wherein the frangible link portion and plunger comprise a metal injection moulded component.

5. A system according to any preceding claim, wherein the detection circuit comprises two connection blocks (33, 35) integrally formed with the frangible link portion (32), one connection block connected to each side of the frangible link portion.

6. A system according to claim 5, wherein the connection blocks include an electrically insulating cover (43, 45, 47) to ensure no electrical reconnection of the frangible link (32) to the connection blocks after the frangible link portion has been broken from the detection circuit.

7. A system according to claim 5 or claim 6, wherein the connection blocks (33, 35) are each connected to two wires (34, 36) which are connected in parallel to each other.

8. A system according to any preceding claim, further comprising a controller connected to the detection circuit, the controller configured to shut off power to the gas turbine engine when the frangible link portion of the detection circuit is detected to be broken.

9. A system according to any preceding claim, wherein the plunger (38) is mounted to a casing of the gas turbine engine.

10. A system according to any preceding claim, further comprising a flexible cover (55) over the plunger (38).

11. A detector element for detecting abnormal movement of a shaft in a gas turbine engine, comprising two electrical connection blocks (33, 35) for connection to a sensing circuit, wherein the connection blocks are electrically connected to each other by a frangible link portion (32), and the detector element further comprises a plunger (38), **characterised in that** the plunger (38) is fixed to the frangible link portion.

12. A detector element according to claim 11, wherein at least a portion of the plunger (38) is integrally formed with the frangible link portion (32).

13. A detector element according to claim 11 or claim 12 wherein the connection blocks (33, 35) each include an electrically insulating cover (43, 45, 47) to ensure no electrical reconnection of the frangible link (32) to the connection blocks (33, 35) after the frangible link portion (32) has been broken from the connection blocks (33, 35).

14. A detector element according to claim 13, wherein the electrically insulating covers (47) are integrally formed with each other.

15. A detector element according to any preceding claim, wherein the plunger (38) includes an insulating layer (48) covering a core element (38) that is integral with the frangible link portion (32), and a metal cap (49) covering the insulating layer.

## Patentansprüche

1. System zum Erkennen von anormalen Bewegungen einer Welle in einem Gasturbinentriebwerk, das eine Erkennungsschaltung umfasst, wobei die Erkennungsschaltung einen Sollbruchverbindungsabschnitt (32) und einen Kolben (38) umfasst, **dadurch gekennzeichnet, dass** der Kolben am Sollbruchverbindungsabschnitt (32) fixiert ist, wobei der Kolben infolge einer anormalen Bewegung der Gasturbinenwelle verschoben werden kann, um den Sollbruchverbindungsabschnitt von der Erkennungsschaltung zu brechen.

2. System nach Anspruch 1, wobei das Brechen des Sollbruchverbindungsabschnitts (32) von der Erkennungsschaltung die Erkennungsschaltung modifizieren und ein Signal erzeugen kann, wenn der Verbindungsabschnitt von der Erkennungsschaltung gebrochen wird.

3. System nach einem vorherigen Anspruch, wobei wenigstens ein Teil des Kolbens (38) einstückig mit dem Sollbruchverbindungsabschnitt (32) ausgebildet ist.

4. System nach einem vorherigen Anspruch, wobei der Sollbruchverbindungsabschnitt und der Kolben eine spritzgeformte Metallkomponente umfassen.

5. System nach einem vorherigen Anspruch, wobei die Erkennungsschaltung zwei einstückig mit dem Sollbruchverbindungsabschnitt (32) ausgebildete Verbindungsblöcke (33, 35) umfasst, wobei ein Verbindungsblock mit jeder Seite des Sollbruchverbindungsabschnitts verbunden ist.

6. System nach Anspruch 5, wobei die Verbindungsblöcke eine elektrisch isolierende Abdeckung (43, 45, 47) aufweisen, um sicherzustellen, dass es nach dem Brechen des Sollbruchverbindungsabschnitts von der Erkennungsschaltung zu keiner erneuten elektrischen Verbindung zwischen der Sollbruchverbindung (32) und den Verbindungsblöcken kommt.

7. System nach Anspruch 5 oder Anspruch 6, wobei die Verbindungsblöcke (33, 35) jeweils mit zwei Drähten (34, 36) verbunden sind, die parallel zueinander geschaltet sind.

8. System nach einem vorherigen Anspruch, das ferner eine mit der Erkennungsschaltung verbundene Steuerung umfasst, die zum Abschalten des Stroms zu dem Gasturbinentriebwerk konfiguriert ist, wenn der Sollbruchverbindungsabschnitt der Erkennungsschaltung als gebrochen erkannt wird.

9. System nach einem vorherigen Anspruch, wobei der Kolben (38) an einem Gehäuse des Gasturbinentriebwerks montiert ist.

10. System nach einem vorherigen Anspruch, das ferner eine flexible Abdeckung (55) über dem Kolben (38) umfasst.

11. Detektorelement zum Erkennen von anormalen Bewegungen einer Welle in einem Gasturbinentriebwerk, umfassend zwei elektrische Verbindungsblöcke (33, 35) zum Verbinden mit einer Erfassungsschaltung, wobei die Verbindungsblöcke durch einen Sollbruchverbindungsabschnitt (32) elektrisch miteinander verbunden sind, und das Detektorelement ferner einen Kolben (38) umfasst, **dadurch gekennzeichnet, dass** der Kolben (38) am Sollbruchverbindungsabschnitt befestigt ist.

12. Detektorelement nach Anspruch 11, wobei wenigstens ein Abschnitt des Kolbens (38) einstückig mit dem Sollbruchverbindungsabschnitt (32) ausgebildet ist.

13. Detektorelement nach Anspruch 11 oder Anspruch 12, wobei die Verbindungsblöcke (33, 35) jeweils eine elektrisch isolierende Abdeckung (43, 45, 47) aufweisen, um sicherzustellen, dass es nach dem Brechen des Sollbruchverbindungsabschnitts (32) von den Verbindungsblöcken (33, 35) nicht zu einer erneuten elektrischen Verbindung der Sollbruchverbindung (32) mit den Verbindungsblöcken (33, 35) kommt.

14. Detektorelement nach Anspruch 13, wobei die elektrisch isolierenden Abdeckungen (47) einstückig miteinander ausgebildet sind.

15. Detektorelement nach einem vorherigen Anspruch, wobei der Kolben (38) eine Isolierschicht (48) aufweist, die ein Kernelement (38) bedeckt, das einstückig mit dem Sollbruchverbindungsabschnitt (32) ausgebildet ist, und eine Metallkappe (49), die die Isolierschicht bedeckt.

## Revendications

1. Système de détection d'un mouvement anormal d'un arbre dans une turbine à gaz comprenant un circuit de détection, le circuit de détection comprenant une partie de liaison frangible (32) et un piston (38), **caractérisé en ce que** le piston est fixé à la partie de liaison frangible (32), dans lequel le piston peut être déplacé suite à un mouvement anormal de l'arbre de turbine à gaz pour rompre la partie de liaison frangible d'avec le circuit de détection.

2. Système selon la revendication 1 dans lequel la rupture de la partie de liaison frangible (32) d'avec le circuit de détection peut ainsi modifier le circuit de détection et générer un signal quand la partie de liaison est rompue d'avec le circuit de détection.

3. Système selon l'une quelconque des revendications précédentes, dans lequel au moins une partie du piston (38) est formée solidairement à la partie de liaison frangible (32).

4. Système selon l'une quelconque des revendications précédentes, dans lequel la partie de liaison frangible et le piston constituent un composant moulé par injection de métal.

5. Système selon l'une quelconque des revendications précédentes, dans lequel le circuit de détection comprend deux blocs de connexion (33, 35) formés solidairement à la partie de liaison frangible (32), un bloc de connexion étant connecté à chaque côté de la partie de liaison frangible.

6. Système selon la revendication 5, dans lequel les blocs de connexion comportent un couvercle électriquement isolant (43, 45, 47) pour garantir l'impossibilité d'une reconnexion électrique de la liaison frangible (32) aux blocs de connexion après la rupture de la partie de liaison frangible d'avec le circuit de détection.

7. Système selon la revendication 5 ou la revendication 6, dans lequel les blocs de connexion (33, 35) sont connectés chacun à deux fils (34, 36) qui sont connectés en parallèle l'un à l'autre.

8. Système selon l'une quelconque des revendications précédentes, comprenant en outre un contrôleur connecté au circuit de détection, le contrôleur étant configuré pour arrêter la puissance allant à la turbine à gaz quand il est détecté que la partie de liaison frangible du circuit de détection est rompue.

9. Système selon l'une quelconque des revendications précédentes, dans lequel le piston (38) est monté sur un carter de la turbine à gaz.

10. Système selon l'une quelconque des revendications précédentes, comprenant en outre un couvercle souple (55) par-dessus le piston (38).

11. Elément détecteur pour détecter un mouvement anormal d'un arbre dans une turbine à gaz, comprenant deux blocs de connexion électrique (33, 35) destinés à être connectés à un circuit de détection, dans lequel les blocs de connexion sont connectés l'un à l'autre par une partie de liaison frangible (32), et l'élément détecteur comprend en outre un piston (38), **caractérisé en ce que** le piston (38) est fixé à la partie de liaison frangible.

12. Elément détecteur selon la revendication 11, dans lequel au moins une partie du piston (38) est formée solidairement à la partie de liaison frangible (32).

13. Elément détecteur selon la revendication 11 ou la revendication 12, dans lequel les blocs de connexion (33, 35) comportent chacun un couvercle électriquement isolant (43, 45, 47) pour garantir l'impossibilité d'une reconnexion électrique de la liaison frangible (32) aux blocs de connexion (33, 35) après que la partie de liaison frangible (32) a été rompue d'avec les blocs de connexion (33, 35).

14. Elément détecteur selon la revendication 13, dans lequel les couvercles électriquement isolants (47) sont formés solidairement l'un à l'autre.

15. Elément détecteur selon l'une quelconque des revendications précédentes, dans lequel le piston (38) comporte une couche isolante (48) qui couvre un élément central (38) qui fait partie intégrante de la partie de liaison frangible (32), et un cache métallique (49) qui couvre la couche isolante.
